# EUROPEAN PATENT APPLICATION

(11) **EP 4 531 440 A1**
(43) Date of publication of application: **02.04.2025**
(21) Application number: 24737295.6
(22) Date of filing: 02.05.2024
(51) Int. Cl.: H04S 7/00, H04S 3/00, H04N 21/436, G06F 3/16

(54) **ELECTRONIC DEVICE AND CONTROL METHOD THEREFOR**

(30) Priority: 16.08.2023 KR 20230107201
(71) Applicant: Samsung Electronics Co., Ltd, Suwon-si, Gyeonggi-do 16677 (KR)
(72) Inventor: JUNG, Donghyun, Suwon-si Gyeonggi-do 16677 (KR); KIM, Sungjoo, Suwon-si Gyeonggi-do 16677 (KR); KIM, Jongbae, Suwon-si Gyeonggi-do 16677 (KR); LEE, Youngsang, Suwon-si Gyeonggi-do 16677 (KR)
(74) Representative: Walaski, Jan Filip
(86) International application number: PCT/KR2024/005954
(87) International publication number: WO 2025/037705

(57) **Abstract**

The device includes: at least one first sensor configured to detect a folding angle between the electronic device and the at least one other electronic device and a processor configured to acquire information on the folding angle between the electronic device and the at least one other electronic device through the first sensor while the electronic device is connected to the at least one other electronic device and operated in a multi-display mode, identify channel mapping information of the audio signal that corresponds to the folding angle, process an input audio signal into a plurality of channels based on the channel mapping information, and output the audio signal of somechannels among the plurality of channels through the at least one speaker, and transmit information on the audio signal of the other channels among the plurality of channels to the at least one other electronic device.

## Description

### [Technical Field]

The present disclosure relates to an electronic device which is connected to at least one other electronic device and provides a multi-display system and a method for controlling the same, and more particularly, to an electronic device which provides an audio signal based on a state of a multi-display in a multi-display system and a method for controlling the same.

### [Background Art]

There is a recent trend to use a multi-display system by using various electronic devices, i.e., by connecting a plurality of displays of the electronic devices with each other. In addition, the plurality of displays may be connected with each other to thus expand into one screen, and a user may thus be provided with an expanded display environment.

The multi-display system often may not support an audio signal by expanding the same to cope with the expanded screen. That is, most of the multi-display systems may simply provide the expanded screen and may not process the audio signal based on a changed display configuration. For example, only a device including a main display may provide sound through a speaker even though the displays are connected to each other.

A sense of heterogeneity may occur between the audio signal and the expanded screen in case that only the screen is expanded without processing the audio signal in this way. That is, there is a need to process the audio signal in view of the expanded screen in the case that the screen is expanded by connecting a plurality of displays with each other.

### [Disclosure]

### [Technical Solution]

According to an embodiment of the present disclosure, provided is an electronic device connected with at least one other electronic device and providing a multi-display system, the device including: a display; at least one speaker configured to output an audio signal; at least one first sensor configured to detect a folding angle between the electronic device and the at least one other electronic device; a communication interface configured to perform communication with the at least one other electronic device; a memory; and a processor configured to acquire information on the folding angle between the electronic device and the at least one other electronic device through the first sensor while the electronic device is connected to the at least one other electronic device and operated in a multi-display mode, identify channel mapping information of the audio signal that corresponds to the folding angle, process an input audio signal into a plurality of channels based on the channel mapping information, and output the audio signal of a partial channel among the plurality of channels through the at least one speaker, and control the communication interface to transmit information on the audio signal of the other channel among the plurality of channels to the at least one other electronic device.

The processor may be configured to process the input audio signal into the plurality of channels based on first channel mapping information in case that the electronic device and the at least one other electronic device are in an unfolding state, and process the input audio signal into the plurality of channels based on second channel mapping information in case that the electronic device and the at least one other electronic device are in a folding state with a first folding angle.

The processor may be configured to identify volume information of each audio signal of the plurality of channels based on the folding angle, and output the audio signal of the partial channel at a first volume through the at least one speaker, and control the communication interface to transmit information for controlling the audio signal of the other channel to be output at a second volume to the at least one other electronic device, based on the volume information.

The first volume may be greater than the second volume, and the second volume may be reduced as the folding angle is increased.

The processor may be configured to identify delay information of each audio signal of the plurality of channels based on the folding angle, and output the audio signal of the partial channel through the at least one speaker, and control the communication interface to transmit information for controlling the audio signal of the other channel to be output after being delayed for a first time to the at least one other electronic device, based on the delay information.

The first delay time may be longer as the folding angle is increased.

The device may further include a second sensor configured to detect a user position, wherein the processor is configured to detect the user position through the second sensor, and adjust at least one of the volume or delay time of each audio signal of the plurality of channels based on each distance between the user position and the electronic device or the at least one other electronic device.

The processor may be configured to adjust the volume of the audio signal output by the electronic device disposed at a first distance from the user position to a first volume, and adjust the volume of the audio signal output by the electronic device disposed at a second distance, which is farther than the first distance, from the user position to a second volume, the second volume being greater than the first volume.

The processor may be configured to adjust the audio signal output by the electronic device disposed at a first distance from a user position to be output after being delayed for a second time from the audio signal output by the electronic device disposed at a second distance, which is farther than the first distance, from the user position.

The channel mapping information of the audio signal that corresponds to the folding angle may be pre-stored in the memory.

According to an embodiment of the present disclosure, provided is a method for controlling an electronic device connected with at least one other electronic device and providing a multi-display system, the method including: acquiring information on a folding angle between the electronic device and the at least one other electronic device while the electronic device is connected to the at least one other electronic device and operated in a multi-display mode; identifying channel mapping information of an audio signal that corresponds to the folding angle; processing an input audio signal into a plurality of channels based on the channel mapping information; and outputting the audio signal of a partial channel among the plurality of channels through at least one speaker, and transmitting information on the audio signal of the other channel among the plurality of channels to the at least one other electronic device.

In the processing, the input audio signal may be processed into the plurality of channels based on first channel mapping information in case that the electronic device and the at least one other electronic device are in an unfolding state, and the input audio signal may be processed into the plurality of channels based on second channel mapping information in case that the electronic device and the at least one other electronic device are in a folding state with a first folding angle.

The method may further include identifying volume information of each audio signal of the plurality of channels based on the folding angle, wherein in the transmitting, the audio signal of the partial channel is output at a first volume through the at least one speaker, and information for controlling the audio signal of the other channel to be output at a second volume is transmitted to the at least one other electronic device, based on the volume information.

The first volume may be greater than the second volume, and the second volume may be reduced as the folding angle is increased.

The method may further include identifying delay information of each audio signal of the plurality of channels based on the folding angle, wherein in the transmitting, the audio signal of the partial channel is output through the at least one speaker, and information for controlling the audio signal of the other channel to be output after being delayed for a first time is transmitted to the at least one other electronic device, based on the delay information.

The first delay time may be longer as the folding angle is increased.

The method may further include: detecting a user position; and adjusting at least one of the volume or delay time of each audio signal of the plurality of channels based on each distance between the user position and the electronic device or the at least one other electronic device.

In the adjusting, the volume of the audio signal output by the electronic device disposed at a first distance from the user position may be adjusted to a first volume, and the volume of the audio signal output by the electronic device disposed at a second distance, which is farther than the first distance, from the user position may be adjusted to a second volume, the second volume being greater than the first volume.

In the adjusting, the audio signal output by the electronic device disposed at a first distance from a user position may be adjusted to be output after being delayed for a second time from the audio signal output by the electronic device disposed at a second distance, which is farther than the first distance, from the user position.

The channel mapping information of the audio signal that corresponds to the folding angle may be pre-stored in the memory of the electronic device.

### [Description of Drawings]

FIGS. 1A and 1B are diagrams each showing a multi-display system;
FIG. 2 is a block diagram showing a configuration of an electronic device;
FIGS. 3A to 5B are diagrams for explaining implementations in which a channel of an audio signal is remapped based on a configuration of the multi-display system;
FIG. 6 is a graph showing an increased acoustic feature in the multi-display system;
FIGS. 7A and 7B are diagrams for explaining an implementation in which the channel of the audio signal is remapped based on folding between the electronic devices in the multi-display system;
FIGS. 8A, 8B and 8C are diagrams for explaining an implementation in which a volume of the audio signal is adjusted based on the folding between the electronic devices in the multi-display system;
FIGS. 9A, 9B and 9C are diagrams for explaining an implementation in which an output time of the audio signal is delayed based on the folding between the electronic devices in the multi-display system;
FIG. 10 is a flowchart showing a method of processing the audio signal based on the configuration and folding of the multi-display system; and
FIG. 11 is a flowchart for explaining a method for controlling an electronic device.

### [Best Mode]

The present disclosure may be variously modified and have several embodiments, and specific embodiments of the present disclosure are thus shown in the drawings and described in detail in the detailed description. However, it is to be understood that the scope of the present invention is not limited to the specific embodiments, and include various modifications, equivalents, and/or alternatives while still falling within the scope of the claims. Throughout the accompanying drawings, similar components are denoted by similar reference numerals.

In the present disclosure, omitted is a detailed description of a case where it is decided that a detailed description of the known functions or configurations may unnecessarily obscure the principles of the present invention.

In addition, the embodiments described below may be modified in several different forms, and the scope of the invention is not limited to the embodiments disclosed but is defined by the claims.

Terms used in the present disclosure are used only to describe the specific embodiments rather than limiting the scope of the present disclosure. A term of a singular number may include its plural number unless explicitly indicated otherwise in the context.

In the present disclosure, an expression "have", "may have", "include", "may include" or the like, indicates existence of a corresponding feature (for example, a numerical value, a function, an operation, or a component such as a part), and does not exclude existence of an additional feature.

In the present disclosure, an expression "A or B", "at least one of A and/or B", "one or more of A and/or B" or the like, may include all possible combinations of items enumerated together. For example, "A or B", "at least one of A and B", or "at least one of A or B" may indicate all of 1) a case where at least one A is included, 2) a case where at least one B is included, or 3) a case where both of at least one A and at least one B are included.

Expressions "first", "second" and the like, used in the present disclosure, may indicate various components regardless of the sequence and/or importance of the components. These expressions are used only to distinguish one component from another component, and do not limit the corresponding component.

In case that any component (for example, a first component) is mentioned to be "(operatively or communicatively) coupled with/to" or "connected to" another component (for example, a second component), it is to be understood that any component is directly coupled to another component or coupled to another component through still another component (for example, a third component).

On the other hand, in case that any component (for example, the first component) is mentioned to be "directly coupled to" or "directly connected to" another component (for example, the second component), it is to be understood that still another component (for example, the third component) is not present between any component and another component.

An expression "configured (or set) to" used in the present disclosure may be replaced by an expression "suitable for", "having the capacity to", "designed to", "adapted to", "made to" or "capable of" based on a situation. The expression "configured (or set) to" may not necessarily indicate "specifically designed to" in hardware.

Instead, an expression "a device configured to" in any situation may indicate that the device may "perform-" together with another device or component. For example, "a processor configured (or set) to perform A, B and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

In the embodiments, a "module" or a "~er/or" may perform at least one function or operation, and be implemented by hardware or software or be implemented by a combination of hardware and software. In addition, a plurality of "modules" or a plurality of "~ers/ors" may be integrated in at least one module and implemented by at least one processor except for a "module" or an "~er/or" that needs to be implemented by specific hardware.

Meanwhile, various elements and regions in the drawings are schematically shown. Therefore, the scope of the present disclosure is not limited by relative sizes or intervals shown in the accompanying drawings.

Hereinafter, the embodiments of the present disclosure are described in detail with reference to the accompanying drawings so that those skilled in the art to which the present disclosure pertains may easily practise the present disclosure.

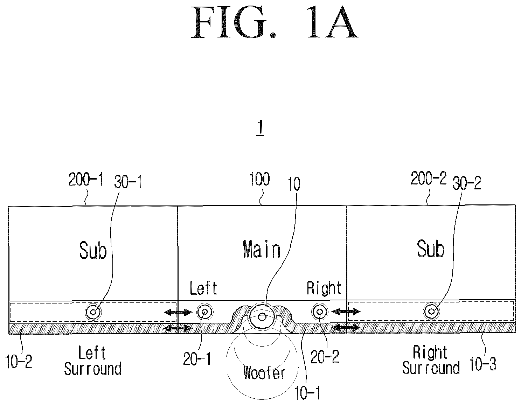

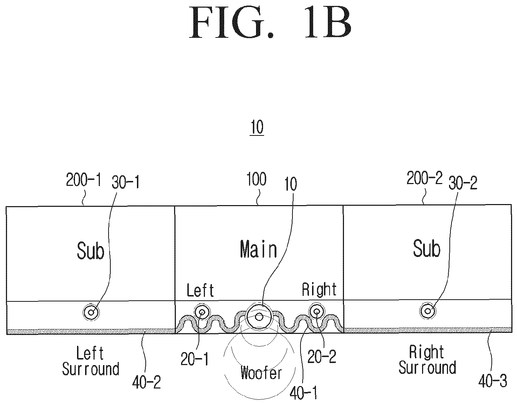

FIGS. 1A and 1B are diagrams each showing a multi-display system.

As shown in FIG. 1A, a multi-display system 1 may include a plurality of electronic devices each including a display. In particular, the multi-display system 1 may include a main electronic device 100 and at least one sub electronic device 200-1 or 200-2. Here, the main electronic device 100 may be named a first electronic device or the electronic device, and the sub electronic device 200 may be named a second electronic device or another electronic device. In addition, the plurality of electronic devices 100, 200-1, and 200-2 may be implemented as digital televisions (TV), which is only an example, and may be implemented as various display devices such as monitors, signages, laptop personal computers (PCs), or tablet PCs.

The main electronic device 100 and at least one sub electronic device 200-1 or 200-2 may be the same type of electronic devices, which is only an example, and may be different types of electronic devices.

In addition, the main electronic device 100 and at least one sub electronic device 200-1 or 200-2 may include different speaker configurations. For example, as shown in FIGS. 1A and 1B, the main electronic device 100 may include two speakers 20-1 and 20-2 and one woofer speaker 10 in a lower end region, and the sub electronic device 200-1 or 200-2 may include one speaker 30. However, this configuration is only an example, and the main electronic device 100 and at least one sub electronic device 200-1 or 200-2 may include the same speaker configuration.

The main electronic device 100 and at least one sub electronic device 200-1 or 200-2 may be connected with each other to configure the multi-display system 1. Here, the main electronic device 100 and at least one sub electronic device 200-1 or 200-2 may not only be electrically connected to each other, but also be physically connected with each other.

In detail, the main electronic device 100 and at least one sub electronic device 200-1 or 200-2 may be electrically connected to each other through a communication interface (e.g., wireless-fidelity (Wi-Fi), Bluetooth, universal serial bus (USB) interface, or high definition multimedia interface (HDMI)). Accordingly, the main electronic device 100 and at least one sub electronic device 200-1 or 200-2 may transmit and receive various information (e.g., information on the electronic device, or information for controlling another electronic device) therebetween.

In addition, the main electronic device 100 and at least one sub electronic device 200-1 or 200-2 may be physically connected with each other to be rotatable by various fasteners. For example, the main electronic device 100 and at least one sub electronic device 200-1 or 200-2 may be physically connected with each other to be rotatable using a pogo pin or a hinge. Therefore, the main electronic device 100 and at least one sub electronic device 200-1 or 200-2 may be foldable using the fastener.

The multi-display system 1 may be operated in a multi-display mode to provide an expanded screen and an expanded audio signal in case that the main electronic device 100 and at least one sub electronic device 200-1 or 200-2 are connected with each other. Here, the multi-display mode may be a mode for providing at least one screen by using the plurality of displays included in the plurality of electronic devices 100, 200-1, and 200-2. Here, while operated in the multi-display mode, the multi-display system may provide one screen by using all the plurality of electronic devices 100, 200-1, and 200-2, which is only an example, and provide one screen by using at least two of the plurality of electronic devices, and provide another screen by using the other electronic devices.

In particular, while operated in the multi-display mode, the multi-display system 1 may provide the expanded screen by using the plurality of displays respectively included in the plurality of electronic devices 100, 200-1, and 200-2, and provide the expanded audio signal by using the speakers respectively included in the plurality of electronic devices 100, 200-1, and 200-2.

In particular, the multi-display system 1 may process the audio signal into a plurality of channels based on configuration information of the multi-display system 1, and provide the same. Here, the configuration information may include the information on the electronic device included in the multi-display system 1 (e.g., information on the speaker included in the electronic device), information on a connection state of the electronic devices included in the multi-display system 1, or the like.

In particular, the main electronic device 100 may identify channel mapping information of the audio signal based on the configuration information of the multi-display system 1 including an expanded display, and process the input audio signal based on the channel mapping information of the identified audio signal. Here, the channel mapping information may include information on a channel with which the input audio signal is processed (or scaled), information on a type of channel, and information on a channel to be processed by the plurality of speakers. The information on the type of channel may include a channel format, for example, two channels, three channels, four channels, 5.1 channels, or the like.

For example, the audio signal may be input through two channels. In this case, while the multi-display system 1 is operated in the multi-display mode, the main electronic device 100 may acquire information on four channels as the channel mapping information based on the configuration information of the multi-display system 1, and process the input audio signal into the four channels and output the same.

In addition, the multi-display system 1 may process the audio signal into a channel corresponding to a folded state of the expanded display, and provide the same. In detail, in the case that the plurality of electronic devices 100, 200-1, and 200-2 are in the folded state while the multi-display system is operated in the multi-display mode, the main electronic device 100 may identify the channel mapping information of the audio signal based on a folding angle, and process the input audio signal based on the channel mapping information of the identified audio signal. For example, in case that the audio signal is input through 2.1 channels and the plurality of displays are in the folded state while the multi-display system is operated in the multi-display mode, the electronic device 100 may acquire information on the three channels as the channel mapping information corresponding to the folding angle, and process the input audio signal into the three channels and output the same.

In addition, the multi-display system 1 may output the audio signal by adjusting its volume or delay time period based on the folding angle in case that the expanded display is folded. The description describes the above-mentioned contents in more detail below with reference to the drawings.

In addition, the multi-display system 1 may further secure speaker performance through the display expansion. In detail, at least one sub electronic device 200-1 or 200-2 may use an additional duct/bag chamber or an additional transmission line to secure the speaker performance in a multi-display system 1 including the display added thereto in a horizontal direction. For example, at least one sub electronic device 200-1 or 200-2 may include additional duct 10-2 or 10-3, as shown in FIG. 1A. In case that the main electronic device 100 and at least one sub electronic device 200-1 or 200-2 are connected with each other, the system 1 may provide the audio signal in a richer bass range by connecting a duct 10-1 of the main electronic device 100 and the additional duct 10-2 or 10-3 with each other through the fastener (e.g., clamp). For another example, at least one sub electronic device 200-1 or 200-2 may include additional transmission line 40-2 or 40-3, as shown in FIG. 1B. In case that the main electronic device 100 and at least one sub electronic device 200-1 or 200-2 are connected with each other, the system 1 may provide the audio signal in a richer bass range by connecting a transmission line 40-1 of the main electronic device 100 and the additional transmission line 40-2 or 40-3 with each other. Here, the system 1 may further include a sealing structure to prevent audio from leaking out between the transmission lines or the duct lines in case the electronic devices are in the folded state.

Meanwhile, in some embodiments, the multi-display system 1 may implement the plurality of electronic devices each having a display, which is only an example, and include the plurality of display devices and the electronic devices (e.g., set-top boxes or laptop PCs) controlling the plurality of display devices.

In some embodiments, the multi-display system 1 may include the main electronic device 100 and at least one sub electronic device 200-1 or 200-2, which is only an example, and include the plurality of main electronic devices.

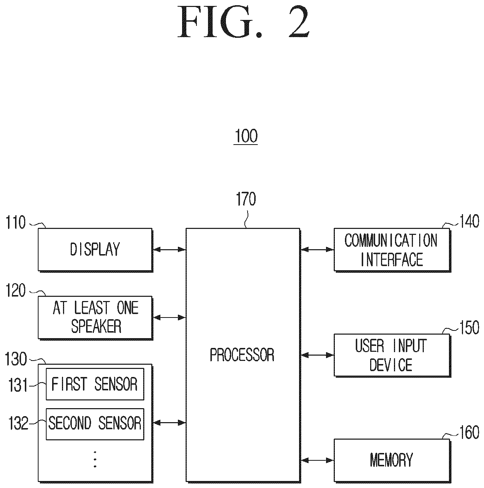

FIG. 2 is a block diagram showing a configuration of an electronic device. As shown in FIG. 2, the electronic device 100 may include a display 110, at least one speaker 120, a sensor 130, a communication interface 140, a user input device 150, a memory 160, and at least one processor 170. However, this configuration is only an example, and some components may be removed or added based on the type of electronic device 100. For example, the electronic device 100 may be implemented as the set-top box. In this case, the electronic device 100 may not include the display 110.

The display 110 may include various types of display panels such as a liquid crystal display (LCD) panel, an organic light-emitting diode (OLED) panel, an active-matrix organic light-emitting diode (AM-OLED) panel, a liquid crystal on silicon (LCoS) panel, a quantum dot light-emitting diode (QLED) panel, a digital light processing (DLP) panel, a plasma display panel (PDP), an inorganic LED panel, and a micro LED panel, and is not limited thereto. Meanwhile, the display 110 may be included in a touch screen together with a touch panel, or may be a flexible panel.

In particular, a main body on which the display 110 is mounted may further include the fastener for its physical connection with another electronic device. Here, the fastener may be implemented as a pogo pin, a hinge, or the like to foldably fasten the electronic device and another electronic device with each other.

The display 110 may provide one image together with the display of another electronic device. For example, the display 110 may provide various content images, such as a movie content image, a game content image, and an internet content image, together with the display of another electronic device.

At least one speaker 120 may output an audio signal processed by at least one processor 170. Here, at least one speaker 120 may output the audio signal through a plurality of channels. For example, at least one speaker 120 may include two speakers and one woofer speaker. Here, the two speakers may be tweeter speakers, but are not limited thereto.

In addition, at least one speaker 120 may be disposed in the lower end region of the electronic device 100, which is only an example, and disposed in the upper end region or side region of the electronic device 100.

At least one speaker 120 may output the audio signal through different channels based on the configuration of the multi-display system 1 or the folding angle. The description describes this configuration in more detail below with reference to the drawings.

The sensor 130 may detect the state of the electronic device 100 (e.g., its movement) or an external environment state (e.g., user state), and generate an electrical signal or a data value, corresponding to the detected state.

In particular, the sensor 130 may include a first sensor 131 acquiring a sensing value for the folding angle between the electronic device 100 and another electronic device 100, and a second sensor 132 detecting a user (or a user face).

The first sensor 131 may be implemented as a sensor detecting a position of the pin changed based on the folding angle, a jog sensor disposed in one region of the electronic device 100 and detecting a rotation angle, thereby detecting the folding angle between the electronic device 100 and another electronic device 100, or the like.

The second sensor 132 may be a sensor detecting a distance between the electronic device 100 and the user, and may be implemented as various sensors such as a camera, a depth camera, an ultrasonic sensor, and the like.

The communication interface 140 may include at least one circuit and communicate with various types of external devices or servers. The communication interface 140 may include at least one of a Bluetooth low energy (BLE) module, a wireless-fidelity (Wi-Fi) communication module, a cellular communication module, a 3rd generation (3G) mobile communication module, a 4th generation (4G) mobile communication module, a 4th generation long term evolution (LTE) communication module, or a 5th generation (5G) mobile communication module.

Alternatively, the communication interface 140 may include a wired communication interface for inputting and outputting at least one of the audio signal or an image signal. For example, the communication interface 140 may be a high definition multimedia interface (HDMI), which is only an example, and may be any of a mobile high-definition link (MHL), a universal serial bus (USB), a display port (DP), a Thunderbolt port, a video graphics array (VGA) port, a red-green-blue (RGB) port, a D-subminiature (D-SUB), or a digital visual interface (DVI). In some implementation examples, the communication interface 140 may include a port inputting and outputting only the audio signal and a port inputting and outputting only the image signal as separate ports, or may be implemented as a single port inputting and outputting both the audio signal and the image signal.

In particular, the communication interface 140 may communicate with another electronic device included in the multi-display system 1. The communication interface 140 may receive information on another electronic device (for example, information on the speaker), and may transmit at least one of a control signal, the audio signal, and the image signal to another electronic device.

The user input device 150 may include a remote control receiver, a button, a lever, a switch, a touch-type interface, or the like. Here, the touch-type interface may be implemented by receiving input through a user touch on a screen of the display 110 included in the electronic device 100.

In particular, the user input device 150 may receive a user command to operate the system 1 in the multi-display mode. In addition, the user input device 150 may receive the user command to adjust the audio signal in the multi-display mode.

The memory 160 may store an operating system (OS) for controlling overall operations of the components of the electronic device 100, and instructions or data related to the components of the electronic device 100. In particular, the memory 160 may include a plurality of modules to provide a function for expanding the audio signal in the multi-display mode. In particular, in the case that the function to expand the audio signal is executed in the multi-display mode, the electronic device 100 may load, into a volatile memory, data for various modules stored in a non-volatile memory to perform various operations. Here, "loading" refers to an operation of loading and storing data stored in the non-volatile memory into the volatile memory for the processor 170 to access the data.

Meanwhile, the memory 160 may be implemented as a non-volatile memory (e.g., hard disk, solid state drive (SSD), or flash memory), a volatile memory (which may also include a memory in at least one processor 170), or the like.

At least one processor 170 may control the electronic device 100 based on at least one instruction stored in the memory 160.

In particular, at least one processor 170 may include one or more processors. In detail, at least one processor may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. At least one processor may control one of other components of the electronic device or any combination thereof, and perform operations related to the communication or data processing. At least one processor may execute at least one program or instruction stored in the memory. For example, at least one processor may perform a method according to an embodiment of the present disclosure by executing at least one instruction stored in the memory.

In the case that the method according to an embodiment includes a plurality of operations, the plurality of operations may be performed by one processor or may be performed by the plurality of processors. That is, a first operation, a second operation, and a third operation may be performed by the method. In this case, the first operation, the second operation, and the third operation may all be performed by a first processor, or the first operation and the second operation may be performed by the first processor (e.g., general-purpose processor), and the third operation may be performed by a second processor (e.g., artificial intelligence-specific processor).

At least one processor may be implemented as a single core processor including one core, or may be implemented as at least one multicore processor including multicores (e.g., homogeneous multicores or heterogeneous multicores). In case that at least one processor is implemented as the multicore processor, each of the multicores included in the multicore processor may include a processor internal memory such as a cache memory or an on-chip memory, and a common cache shared by the multicores may be included in the multicore processor. In addition, each of the multicores included in the multicore processor (or some of the multicores) may independently read and perform a program instruction for implementing the method according to an embodiment of the present disclosure, or all (or some) of the multicores may be linked to each other to read and perform the program instruction for implementing the method.

In the case that the method according to an embodiment includes a plurality of operations, the plurality of operations may be performed by one core among the multicores included in the multicore processor, or may be performed by the multicores. For example, the first operation, the second operation, and the third operation may be performed by the method. In this case, the first operation, the second operation, and the third operation may all be performed by a first core included in the multicore processor, or the first operation and the second operation may be performed by the first core included in the multicore processor, and the third operation may be performed by a second core included in the multicore processor.

, The at least one processor 170 may acquire information on the folding angle between the electronic device 100 and at least one sub electronic device 200-1 or 200-2 through the first sensor 131 while the electronic device 100 is connected with at least one sub electronic device 200-1 or 200-2 to be operated in the multi-display mode. The at least one processor 170 may identify the channel mapping information of the audio signal that corresponds to the folding angle. The at least one processor 170 may process the input audio signal into the plurality of channels based on the channel mapping information. The at least one processor 170 may output the audio signal of a partial channel among the plurality of channels through at least one speaker 120, and control the communication interface 140 to transmit information on the audio signal of the other channel among the plurality of channels to at least one sub electronic device 200-1 or 200-2.

The at least one processor 170 may process the input audio signal into the plurality of channels based on first channel mapping information in case that the electronic device 100 and at least one sub electronic device 200-1 or 200-2 are in an unfolded state. In addition, the at least one processor 170 may process the input audio signal into the plurality of channels based on second channel mapping information in case that the electronic device 100 and at least one sub electronic device 200-1 or 200-2 are in the folded state with a first folding angle. Here, the first channel mapping information and the second channel mapping information may be different from each other. That is, the electronic device 100 may process the audio signal by using the channel mapping information changed based on the folded state between the electronic device 100 and at least one sub electronic device 200-1 or 200-2.

The at least one processor 170 may identify volume information of each audio signal of the plurality of channels based on the folding angle. The at least one processor 170 may output the audio signal of some channels at a first volume through at least one speaker 120, and control the communication interface 140 to transmit information for controlling the audio signal of the other channels to be output at a second volume to at least one sub electronic device 200-1 or 200-2, based on the volume information. Here, the first volume may be greater than the second volume, and the second volume may be reduced as the folding angle is increased. Accordingly, the processor 170 may maintain a sound image balance by reducing a difference in audio signal volumes that may occur based on a distance between electronic devices and the user, based on the folding angle.

The at least one processor 170 may identify delay information of each audio signal of the plurality of channels based on the folding angle. The at least one processor 170 may output the audio signal of some channels through at least one speaker 120, and control the communication interface 140 to transmit information for controlling the audio signal of another channels to be output after being delayed for a first time to at least one sub electronic device 200-1 or 200-2, based on the delay information. Here, the first delay time may be longer as the folding angle is increased. That is, the folding may cause the difference in the distance between the electronic devices and the user, which may break the balance of the audio signal the user listens to through the left and right speakers. However, as in the present disclosure, the left/right balance of the sound image may be adjusted by delaying and outputting the audio signal of some electronic devices, thereby solving a problem of mismatch occurring between the screen and the sound image.

The at least one processor 170 may detect a user position through the second sensor 132. The at least one processor 170 may adjust at least one of the volume or delay time of each audio signal of the plurality of channels based on each distance between the user position and the electronic device or at least one sub electronic device 200-1 or 200-2. In detail, at least one processor 170 may adjust the volume of the audio signal output by the electronic device disposed at a first distance from the user position to the first volume, and adjust the volume of the audio signal output by the electronic device disposed at a second distance, which is farther than the first distance, from the user position to the second volume. Here, the second volume may be greater than the first volume. In addition, at least one processor 170 may adjust the audio signal output by the electronic device disposed at the first distance from the user position to be output after being delayed for a second time from the audio signal output by the electronic device disposed at the second distance, which is farther than the first distance, from the user position. In this way, it is possible to adjust the volume and delay time of the audio signal based on the user position, thereby providing a personalized audio signal environment.

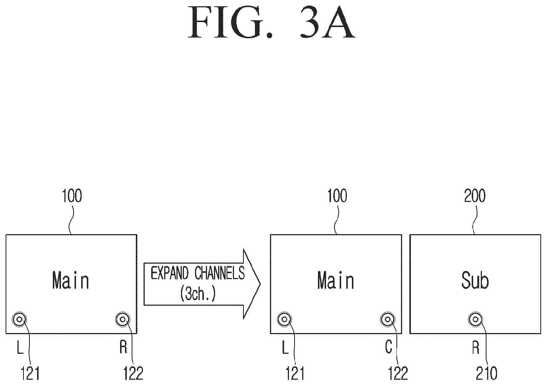

Hereinafter, the present disclosure is described in more detail with reference to the accompanying drawings. FIGS. 3A to 5B are diagrams for explaining implementations in which the channel of the audio signal is remapped based on the configuration of the multi-display system.

The multi-display system 1 may identify the channel mapping information corresponding to the configuration information of the multi-display system 1, and process the input audio signal based on the channel mapping information. That is, the multi-display system 1 may identify the channel mapping information based on a connection position of the main electronic device 100 and the sub electronic device 200, the information on the speakers included in the electronic devices (e.g., number of speakers or positions of speakers), or the like, and process the input audio signal based on the identified channel mapping information.

The main electronic device 100 may not be connected to the sub electronic device. In this case, the main electronic device 100 may process the input audio signal into a two-channel audio signal and output the same, as shown on the left of FIG. 3A. That is, the main electronic device 100 may output a left-channel audio signal through a left speaker 121 and output a right-channel audio signal through a right speaker 122. On the other hand, the sub electronic device 200 may be connected to the right of the main electronic device 100. In this case, the main electronic device 100 may identify the channel mapping information based on the position information and information on the speakers of the main electronic device 100 and the sub electronic device 200 which are included in the multi-display system. That is, in case that the sub electronic device 200 is connected to the main electronic device 100, the main electronic device 100 may receive the information on the speaker included in the sub electronic device 200 from the sub electronic device 200, and identify the channel mapping information based on the received information on the speaker included in the sub electronic device 200, the information on the speaker included in the main electronic device 100, and the information on the position at which the sub electronic device 200 is connected. Here, as shown on the right of FIG. 3A, the main electronic device 100 may process the input audio signal into three channels (i.e., right channel, left channel, and center channel) and output the same based on the identified channel mapping information. Here, the main electronic device 100 may output the left-channel audio signal through the left speaker 121 and output a center-channel audio signal through the right speaker 122. In addition, the main electronic device 100 may transmit the control signal for outputting the right-channel audio signal to the sub electronic device 200, and the sub electronic device 200 may output the right-channel audio signal through a speaker 210 in response to the control signal. Here, the control signal may include information on the right-channel audio signal.

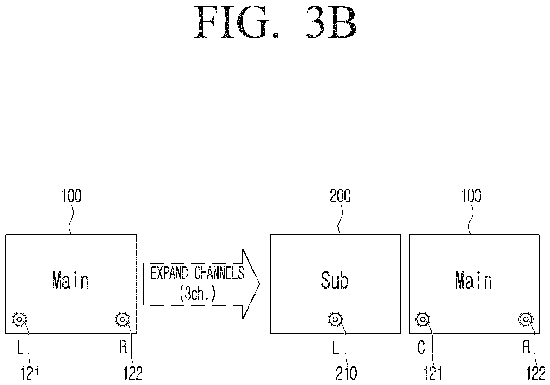

As shown in FIG. 3B, the sub electronic device 200 may be connected to the left of the main electronic device 100 while the main electronic device 100 outputs the two-channel audio signal. As in the case of FIG. 3A, the main electronic device 100 may identify the channel mapping information based on the position information on the speakers of the main electronic device 100 and the sub electronic device 200 which are included in the multi-display system and information on the speakers of the main electronic device 100 and the sub electronic device 200 which are included in the multi-display system. In particular, the main electronic device 100 may receive the information on the speaker included in the sub electronic device 200 from the sub electronic device 200, and identify the channel mapping information based on the received information on the speaker included in the sub electronic device 200, the information on the speaker included in the main electronic device 100, and the information on the position at which the sub electronic device 200 is connected. Here, as shown on the right of FIG. 3B, the main electronic device 100 may process the input audio signal into the three channels (i.e., right channel, left channel, and center channel) and output the same based on the identified channel mapping information. Here, the main electronic device 100 may output the center-channel audio signal through the left speaker 121 and output the right-channel audio signal through the right speaker 122. In addition, the main electronic device 100 may transmit the control signal for outputting the left-channel audio signal to the sub electronic device 200, and the sub electronic device 200 may output the left-channel audio signal through the speaker 210 in response to the control signal.

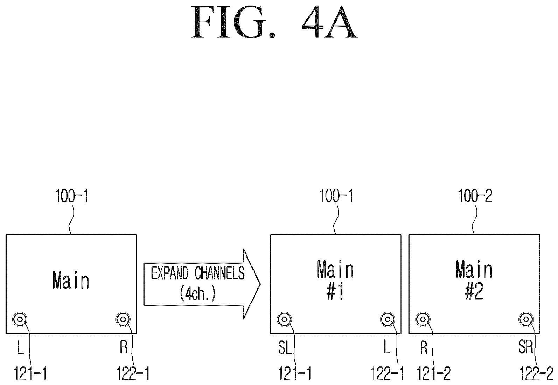

As shown in FIG. 4A, a second main electronic device 100-2 may be connected to the right of a first main electronic device 100-1 while the first main electronic device 100-1 outputs the two-channel audio signal. In this case, the first main electronic device 100-1 may identify the channel mapping information based on the position information and information on speakers of the first and second main electronic devices 100-1 and 100-2 which are included in the multi-display system. In particular, the first main electronic device 100-1 may receive information on the speaker included in the second main electronic device 100-2 from the second main electronic device 100-2, and identify the channel mapping information based on the received information on the speaker included in the second main electronic device 100-2, information on the speaker included in the first main electronic device 100-1, and the information on the position at which the second main electronic device 100-2 is connected. Here, as shown on the right of FIG. 4A, the first main electronic device 100-1 may process the input audio signal into four channels (i.e., right channel, left channel, surround left channel, and surround right channel) and output the same based on the identified channel mapping information. Here, the first main electronic device 100-1 may output a surround left-channel audio signal through a left speaker 121-1 and output the left-channel audio signal through a right speaker 122-1. In addition, the first main electronic device 100-1 may transmit the control signal for outputting the right-channel audio signal and a surround right-channel audio signal to the second main electronic device 100-2, and the second main electronic device 100-2 may output the right-channel audio signal through a left speaker 121-2 and output a surround right-channel audio signal through a right speaker 122-2, in response to the control signal.

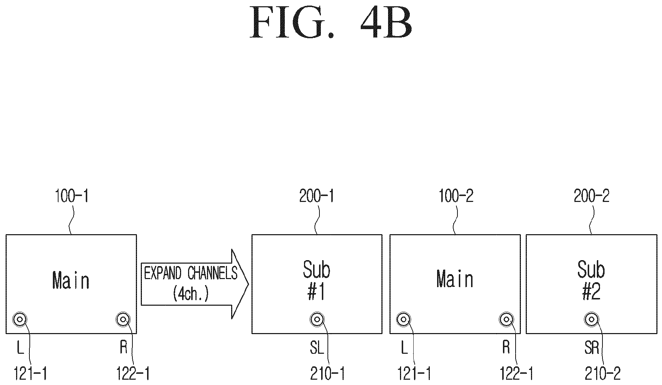

As shown in FIG. 4B, the first sub electronic device 200-1 may be connected to the left of the main electronic device 100 and the second sub electronic device 200-2 may be connected to the right of the main electronic device 100 while the main electronic device 100 outputs the two-channel audio signal. In this case, the main electronic device 100 may identify the channel mapping information based on the position information and information on the speakers of the main electronic device 100 and the first and second sub electronic devices 200-1 and 200-2 which are included in the multi-display system. In particular, the main electronic device 100 may receive the information on the speakers from the first and second sub electronic devices 200-1 and 200-2, and identify the channel mapping information based on the information on the received speakers, the information on the speaker included in the main electronic device 100, and the information of the positions to which the sub electronic devices 200-1 and 200-2 are connected. Here, as shown on the right of FIG. 4B, the main electronic device 100 may process the input audio signal into four channels (i.e., right channel, left channel, surround left channel, and surround right channel) and output the same based on the identified channel mapping information. Here, the main electronic device 100 may output the left-channel audio signal through the left speaker 121 and output the right-channel audio signal through the right speaker 122. In addition, the main electronic device 100 may transmit the control signal for outputting the surround left-channel audio signal and the surround right-channel audio signal to the first and second sub electronic devices 200-1 and 200-2, the first sub electronic device 200-1 may output the surround left-channel audio signal through a speaker 210-1 in response to the control signal, and the second sub electronic device 200-2 may output the surround right-channel audio signal through a speaker 210-2 in response to the control signal.

As described with reference to FIGS. 3A to 4B, another electronic device may be connected to the main electronic device 100 in the horizontal direction. In this case, the system 1 may process the audio signal into three or four channels, thus providing not only a wider sound stage but also immersive audio as the physical distance is increased between the speaker outputting the left channel and the speaker outputting the right channel.

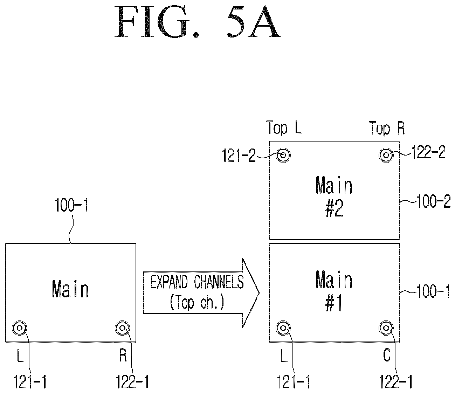

As shown in FIG. 5A, the second main electronic device 100-2 may be connected to the top of the first main electronic device 100-1 while the first main electronic device 100-1 outputs the two-channel audio signal. In this case, the first main electronic device 100-1 may receive the information on the speaker included by the second main electronic device 100-2 from the second main electronic device 100-2, and identify the channel mapping information based on the received information on the speaker included in the second main electronic device 100-2, the information on the speaker included in the first main electronic device 100-1, and the information on the position to which the second main electronic device 100-2 is connected. Here, as shown on the right of FIG. 5A, the main electronic device 100-1 may process the input audio signal into four channels (i.e., right channel, left channel, top right channel, and top left channel) and output the same based on the identified channel mapping information. In detail, the first main electronic device 100-1 may output the left-channel audio signal through the left speaker 121-1 and output the right-channel audio signal through the right speaker 122-1. In addition, the first main electronic device 100-1 may transmit the control signal for outputting a top right-channel audio signal and a top left-channel audio signal to the second main electronic device 100-2, and the second main electronic device 100-2 may output the top left-channel audio signal through the left speaker 121-2 and the top right-channel audio signal through the right speaker 122-2, in response to the control signal.

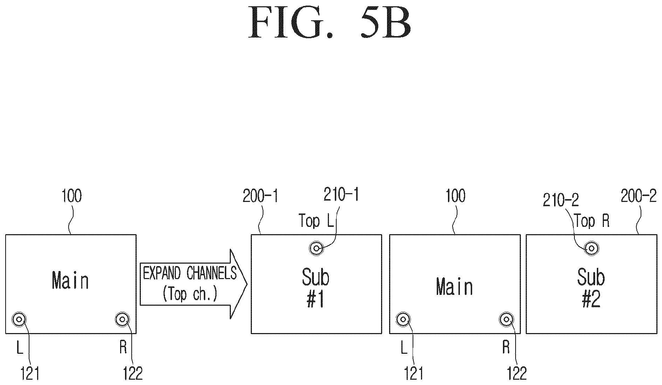

As shown in FIG. 5B, a first sub electronic device 200-1 with a speaker 210-1 located towards the top of the device may be connected to the left of the main electronic device 100, and a second sub electronic device 200-2 with a speaker 210-2 located towards the top of the device may be connected to the right of the main electronic device 100 while the main electronic device 100 outputs the two-channel audio signal. In this case, the main electronic device 100 may identify the channel mapping information based on the position information and information on the speakers of the main electronic device 100, the first and second sub electronic devices 200-1 and 200-2 which are included in the multi-display system. In particular, the main electronic device 100 may receive the information on the speaker (i.e., number of speakers and position information of the speaker) from the first and second sub electronic devices 200-1 and 200-2, and identify the channel mapping information based on the received information on the speaker, the information on the speaker included in the main electronic device 100, and the information on the positions to which the sub electronic devices 200-1 and 200-2 are connected. Here, as shown on the right of FIG. 5B, the main electronic device 100 may process the input audio signal into four channels (i.e., right channel, left channel, top left channel, and top right channel) and output the same based on the identified channel mapping information. Here, the main electronic device 100 may output the left-channel audio signal through the left speaker 121 and output the right-channel audio signal through the right speaker 122. In addition, the main electronic device 100 may transmit the control signal for outputting the top left-channel audio signal and the top right-channel audio signal to the first and second sub electronic devices 200-1 and 200-2, the first sub electronic device 200-1 may output the top left-channel audio signal through the speaker 210-1 in response to the control signal, and the second sub electronic device 200-2 may output the top right-channel audio signal through the speaker 210-2 in response to the control signal.

As shown in FIGS. 5A and 5B, the electronic device may have another electronic device connected therewith in a vertical direction or have the electronic device including the speaker disposed on its upper part and connected therewith. In this case, the multi-display system 1 may add a top channel (or height channel), thus implementing audio of the top channel corresponding to Dolby Atmosphere (ATMOS).

As described with reference to FIGS. 3A to 5B, the electronic device 100 may expand the audio signal by identifying the channel mapping information based on the configuration information (e.g., information on the position of another electronic device to which the electronic device 100 is connected or information on the speaker included in another electronic device) of the multi-display system. Accordingly, the user may receive content through the expanded audio signal together with the expanded screen.

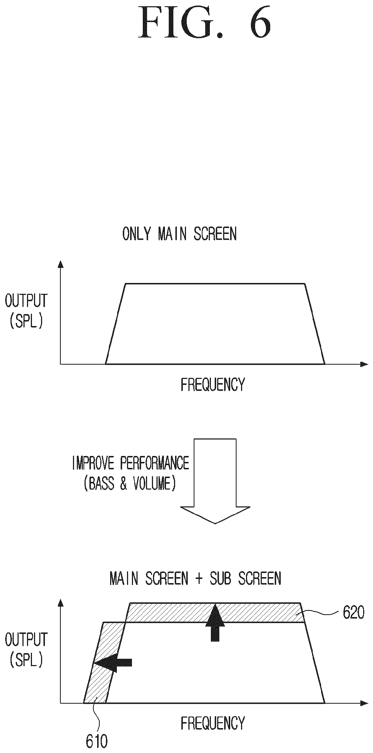

In particular, as shown in FIG. 6, not only a bass sound feature 610 but also a volume feature 620 may be improved in case that the main electronic device 100 and another electronic device together provide the audio signal compared to a case where only the main electronic device 100 provides the audio signal.

In addition, the main electronic device 100 may detect the folding angle between the main electronic device 100 and at least one sub electronic device 200-1 or 200-2, and identify the channel mapping information based on the detected folding angle. In addition, the main electronic device 100 may process the input audio signal into a plurality of channels based on the identified channel mapping information. In addition, the main electronic device 100 may output the audio signal of some channels among the plurality of channels through at least one speaker 120, and control the communication interface 140 to transmit the information on the audio signal of other channels among the plurality of channels to at least one sub electronic device 200-1 or 200-2.

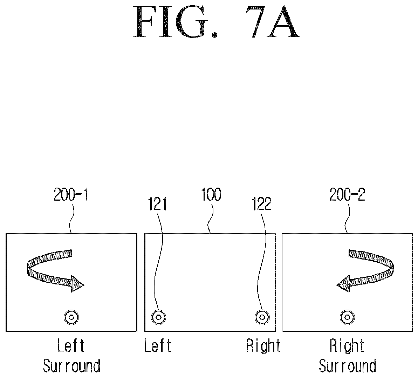

In detail, as shown in FIG. 7A, the main electronic device 100 and the first and second sub electronic devices 200-1 and 200-2 may be in an unfolded state (for example, aligned in a straight line). Here, as described above, the main electronic device 100 may output the left-channel audio signal through the left speaker 121 of the main electronic device 100, and output the right-channel audio signal through the right speaker 122.

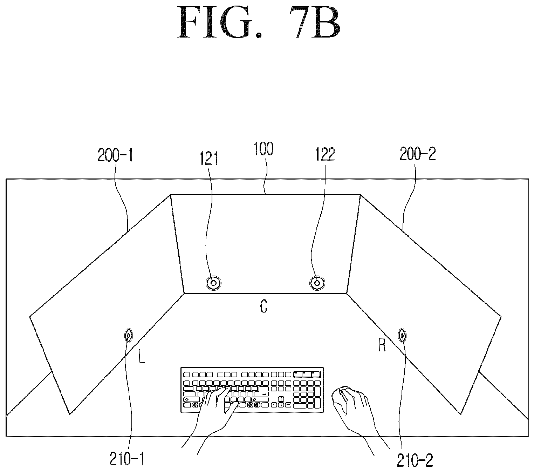

In addition, as shown in FIG. 7B, the first and the second sub electronic devices 200-1 and 200-2 may be in a folded state, for example folded inwards towards a user (listener). In this case, the main electronic device 100 may acquire information on the first folding angle between the main electronic device 100 and the first sub electronic device 200-1 and a second folding angle between the main electronic device 100 and the second sub electronic device 200-2, through the first sensor 131. Here, the first folding angle and the second folding angle may be the same as each other, which is only an example, and may be angles different from each other.

The main electronic device 100 may identify the channel mapping information corresponding to the first folding angle and the second folding angle. Here, the channel mapping information corresponding to the folding angle may be pre-stored in the memory 160. For example, the first folding angle and the second folding angle may each be 30 degrees. In this case, the channel mapping information may include information where the input audio signal is mapped with three channels.

As shown in FIG. 7B, the main electronic device 100 may process the input audio signal into three channels (i.e., left channel, right channel, center channel) based on the channel mapping information and output the same. Here, the main electronic device 100 may output the center-channel audio signal through the left speaker 121 and the right speaker 122. In addition, the main electronic device 100 may transmit the control signal for outputting the left-channel audio signal to the first sub electronic device 200-1, and transmit the control signal for outputting the right-channel audio signal to the second sub electronic device 200-2. The first sub electronic device 200-1 may output the left-channel audio signal through the speaker 210-1 in response to the control signal, and the second sub electronic device 200-2 may output the right-channel audio signal through the speaker 210-2 in response to the control signal.

That is, the main electronic device 100 may process and output the input audio signal based on the channel mapping information changed based on the unfolding or folded state of the multi-display system 1. In detail, the multi-display system 1 in the unfolded state may output the right-channel audio signal and the left-channel audio signal through the main electronic device 100 to correspond to the expanded screen, and output the audio signal of the surround channels through the plurality of sub devices 200-1 and 200-2, thereby providing a wide sound stage. In addition, to provide focused audio to the user, the multi-display system 1 in the folded state may output the center-channel audio signal through the main electronic device 100, and output the left-channel audio signal and the right-channel audio signal through the plurality of sub devices 200-1 and 200-2, thereby providing the user with a specialized sound stage.

Meanwhile, the main electronic device 100 may process the input audio signal based on the channel mapping information changed based on the folding angle. For example, the folding angle may be less than a first threshold value (e.g., 30 degrees). In this case, the main electronic device 100 may process the input audio signal into four channels (e.g., right channel, left channel, surround right channel, and surround left channel). In the case that the folding angle is the first threshold value or more, the main electronic device 100 may process the input audio signal into three channels (e.g., right channel, left channel, and center channel). Here, the first threshold value may be predetermined at the time of manufacture, which is only an example, and/or may be set by the user.

In addition, the main electronic device 100 may identify the volume information and delay time information of each audio signal of the plurality of channels based on the folding angle, and output each audio signal of the plurality of channels based on the identified volume information and delay time information. Here, the delay time may refer to a time delayed based on a time at which the speaker of the electronic device outputs the audio signal in the unfolded state. Here, the volume information and delay time information of each audio signal of the plurality of channels may be pre-stored in the memory based on the folding angle.

In detail, the main electronic device 100 may identify the volume information of each audio signal of the plurality of channels based on the folding angle. In addition, the main electronic device 100 may output the audio signal of some channels at a first volume through at least one speaker 120 based on the volume information, and transmit the information for controlling the audio signal of the other channels to be output at a second volume to at least one sub electronic device 200-1 or 200-2.

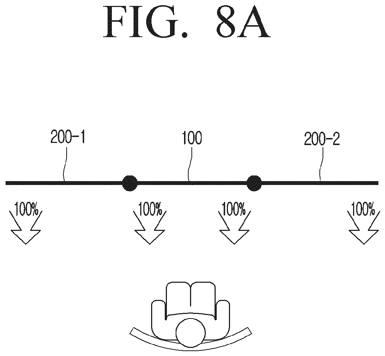

For example, as shown in FIG. 8A, in the unfolded state of the multi-display system 1, the speakers of the main electronic device 100 and the first or second sub electronic device 200-1 or 200-2 may all output the audio signal at 100% volume.

In addition, in the folded state of the multi-display system 1, the speakers of the main electronic device 100 and the first or second sub electronic device 200-1 or 200-2 may all output the audio signal at 100% volume. In this case, the sound image balance may be broken because the user may feel the audio signal louder, the audio signal being output through the speaker of the first or second sub electronic device 200-1 or 200-2, disposed to be closer to the user.

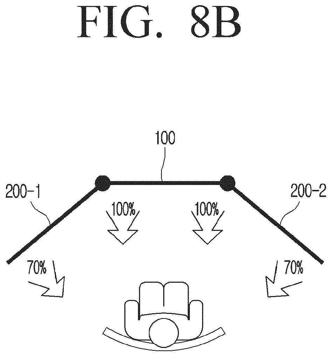

Therefore, as shown in FIG. 8B, in the folded state of the multi-display system 1, the main electronic device 100 may output the audio signal of some channels among the plurality of channels at a first volume (for example, 100%), and transmit the information for controlling the audio signal of the other channels to be output at a second volume (e.g., 70%) to at least one sub electronic device 200-1 or 200-2. That is, the second volume output by the first or second sub electronic device 200-1 or 200-2, disposed to be closer to the user, may be less than the first volume output by the main electronic device 100 disposed to be farther away from the user. Here, the information for controlling the audio signal to be output at the second volume may include the information on the audio signal of the other channels and the information on the second volume.

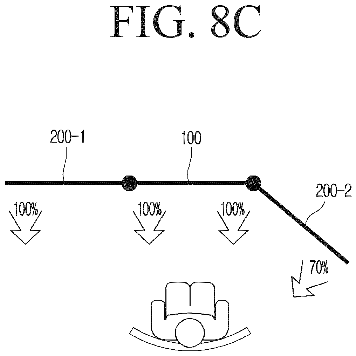

In addition, as shown in FIG. 8C, only the second sub electronic device 200-2 may be in the folded state based on the main electronic device 100 among the plurality of sub electronic devices included in the multi-display system 1. Here, the main electronic device 100 may output the audio signal of some channels among the plurality of channels at the first volume (for example, 100%), transmit the information for controlling the audio signal of the other first channels to be output at the first volume (for example, 100%) to the first sub electronic device 200-1, and transmit the information for controlling the audio signal of the other second channels to be output at the second volume (for example, 70%) to the second sub electronic device 200-2.

Meanwhile, in some examples, the second volume may be reduced as the folding angle is increased. That is, the second volume may be reduced as the folding angle is increased because a distance between the sub electronic device 200 and the user is getting closer as the folding angle is increased.

In addition, the main electronic device 100 and the first or second sub electronic device 200-1 or 200-2 may change the volume of the audio signal in a pre-digital signal processing (DSP) stage based on the folding angle, and optimize the volume at an amplification stage, which is the stage after a DSP stage.

In addition, the main electronic device 100 may identify the delay information of each audio signal of the plurality of channels based on the folding angle. In addition, the main electronic device 100 may output the audio signal of some channels among the plurality of channels through at least one speaker 120 based on the delay information, and transmit the information for controlling the audio signal of the other channels to be output after being delayed for the first time to at least one sub electronic device 200-1 or 200-2.

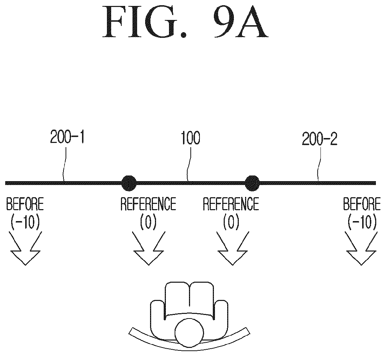

For example, as shown in FIG. 9A, in the unfolded state of the multi-display system 1, in order for the user to listen to the audio signal output by the plurality of electronic devices at the same time, the main electronic device 100 may output the audio signal of some channels at a second time, and the first or second sub electronic device 200-1 or 200-2 may output the audio signal of the other channels at a third time that is delayed for a predetermined time (e.g., 10 milliseconds (ms)) from the second time.

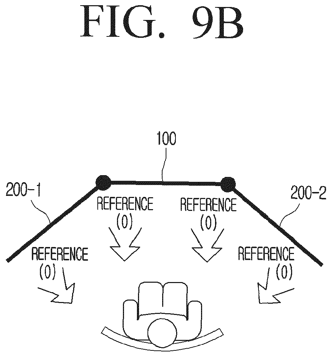

In addition, as shown in FIG. 9B, in the folded state of the multi-display system 1, the speakers of the main electronic device 100 and the first or second sub electronic device 200-1 or 200-2 may output the same audio signal as in the unfolded state. In this case, the user may feel that the audio signal output through the speaker of the first or second sub electronic device 200-1 or 200-2, which is disposed to be closer to the user, reaches the user before the audio signal output through the speaker of the main electronic device 100. The sound image balance may be broken because the user perceives that the sound is played from the fastest sounding speaker.

Therefore, as shown in FIG. 9B, in a state where the multi-display system 1 is folded with a first angle, the main electronic device 100 may output the audio signal of some channels among the plurality of channels at the second time, and transmit the information for controlling the audio signal of the other channels to be output at the second time delayed for the predetermined time (e.g., 10ms) from the existing third time to at least one sub electronic device 200-1 or 200-2. That is, the system 1 may delay and output the audio signal output by the first or second sub electronic device 200-1 or 200-2, disposed to be closer to the user, thereby allowing the user to listen to the audio signals output by the plurality of electronic devices at the same time. Accordingly, the multi-display system 1 may balance left and right sound images and solve the mismatch occurring between the screen and the sound image.

In addition, in some embodiments, the first delay time may be longer as the folding angle is increased. That is, the delay time may be longer as the folding angle is increased because the distance between the sub electronic device 200 and the user is closer as the folding angle is increased.

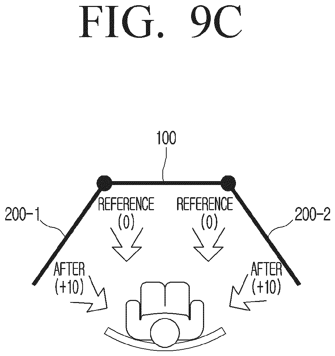

For example, as shown in FIG. 9C, in a state where the multi-display system 1 is folded with a second angle greater than the first angle, the main electronic device 100 may output the audio signal of some channels among the plurality of channels at the second time, and transmit the information for controlling the audio signal of the other channel to be output at a fourth time delayed for a predetermined time (e.g., 20ms) from the existing third time to at least one sub electronic device 200-1 or 200-2. That is, the system 1 may output the audio signal output by the first or second sub electronic device 200-1 or 200-2, disposed to be closer to the user, with a further delay as the folding angle is increased, thereby allowing the user to listen to the audio signals output by the plurality of electronic devices at the same time.

As described above, the system 1 may provide the user with a sound environment having a balanced sound image by adjusting at least one of the volume or the delay time based on the folding angle.

In addition, the main electronic device 100 may detect the user position (or user face position) through the second sensor 132. In addition, the main electronic device 100 may adjust at least one of the volume or delay time of each audio signal of the plurality of channels based on each distance between the user position and the main electronic device 100 or at least one sub electronic device 200-1 or 200-2.

The main electronic device 100 may adjust the volume of the audio signal output by the electronic device disposed at the first distance from the user position to the first volume, and adjust the volume of the audio signal output by the electronic device disposed at the second distance farther than the first distance from the user position to the second volume. Here, the second volume may be greater than the first volume.

That is, the main electronic device 100 may adjust the volume of the audio signal output by the electronic device farther away from the user to be greater than the volume of the audio signal output by the electronic device closer to the user, thus maintaining the sound image balance of the multi-display system 1.

In addition, the main electronic device 100 may adjust the audio signal output by the electronic device disposed at the first distance from the user position to be output after being delayed for the second time from the audio signal output by the electronic device disposed at the second distance farther than the first distance from the user position.

That is, the main electronic device 100 may adjust the audio signal output by the electronic device closer to the user to be delayed and output than the audio signal output by the electronic device farther away from the user, thus maintaining the sound image balance of the multi-display system 1.

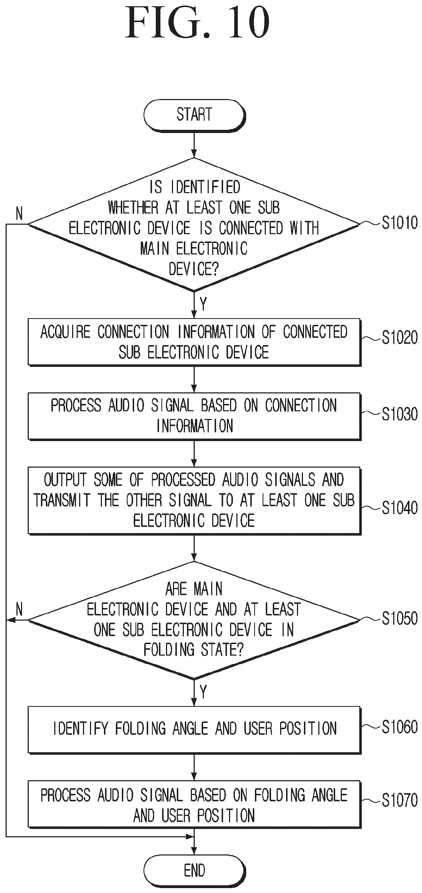

FIG. 10 is a flowchart showing a method of processing the audio signal based on the configuration and folding of the multi-display system.

The main electronic device 100 may identify whether at least one sub electronic device is connected with the main electronic device 100 (S1010).

The main electronic device 100 may acquire configuration information of the multi-display system 1 (S1020) in case of identifying that at least one sub electronic device is connected with the main electronic device 100 (S1010-Y). Here, the configuration information may include the information on the electronic device included in the multi-display system 1 (e.g., information on the speaker included in the electronic device), information on a connection state of the electronic devices included in the multi-display system 1, or the like.

The main electronic device 100 may process the audio signal based on the configuration information (S1030). That is, the main electronic device 100 may process the input audio signal into the plurality of channels based on the configuration information by using the same method as described with reference to FIGS. 3A to 5B.

The main electronic device 100 may output some of the processed audio signals and transmit the other signals to at least one sub electronic device 200-1 or 200-2 (S1040). That is, the main electronic device 100 may output the audio signal of some channels among the processed audio signals through the speaker, and at least one sub electronic device 200-1 or 200-2 may output the audio signal of the other channels through the speaker based on the control signal received from the main electronic device 100.

The main electronic device 100 may identify whether the main electronic device 100 and at least one sub electronic device 200-1 or 200-2 are in the folding (folded) state (S1050).

The main electronic device 100 may identify the folding angle and the user position (S1060) in case that the main electronic device 100 and at least one sub electronic device 200-1 or 200-2 are in the folded state (S1050-Y). That is, the main electronic device 100 may identify the folding angle through the first sensor 131 and identify the user position through the second sensor 132.

The main electronic device 100 may process the audio signal based on the folding angle and the user position (S1070). That is, the main electronic device 100 may process the input audio signal into the plurality of channels and adjust its volume and delay time by using the method described with reference to FIGS. 7A to 9C.

In addition, the main electronic device 100 may output some of the processed audio signals, and transmit the other audio signal to at least one sub electronic device 200-1 or 200-2. The main electronic device 100 may transmit the audio signal processed based on the volume information and the delay time information to at least one sub electronic device 200-1 or 200-2. In this case, the sub electronic device 200 may immediately output the received audio signal. The main electronic device 100 may transmit the audio signal of a channel corresponding to the sub electronic device 200 together with the volume information and the delay time information. In this case, the sub electronic device 200 may process and output the audio signal of the channel corresponding to the sub electronic device 200 based on the volume information and the delay time information.

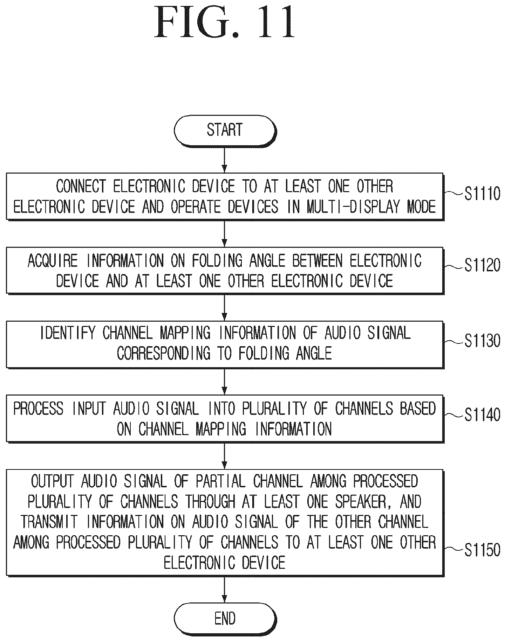

FIG. 11 is a flowchart for explaining a method for controlling an electronic device.

First, the electronic device 100 may acquire information on the folding angle between the electronic device 100 and at least one other electronic device while the electronic device 100 is connected with at least one other electronic device and operated in the multi-display mode (S1120).

The electronic device 100 may identify the channel mapping information of the audio signal corresponding to the folding angle (S1130).

The electronic device 100 may process the input audio signal into the plurality of channels based on the channel mapping information (S1140). Here, the electronic device 100 may process the input audio signal into the plurality of channels based on the first channel mapping information in case that the electronic device 100 and at least one other electronic device are in the unfolded state. The electronic device 100 may process the input audio signal into the plurality of channels based on the second channel mapping information in case that the electronic device 100 and at least one other electronic device are in the folded state with the first folding angle.

The electronic device 100 may output the audio signal of some channels among the plurality of channels through at least one speaker, and transmit the information on the audio signal of the other channels among the plurality of channels to at least one other electronic device (S1140).

In addition, the electronic device 100 may identify the volume information of each audio signal of the plurality of channels based on the folding angle. In addition, the electronic device 100 may output the audio signal of some channels at the first volume through at least one speaker 120 based on the volume information, and transmit the information for controlling the audio signal of the other channels to be output at the second volume to at least one sub electronic device. Here, the first volume may be greater than the second volume, and the second volume may be reduced as the folding angle is increased.

In addition, the electronic device 100 may identify the delay information of each audio signal of the plurality of channels based on the folding angle. The electronic device 100 may output the audio signal of the partial channel through at least one speaker 120 based on the delay information, and transmit the information for controlling the audio signal of the other channel to be output after being delayed for the first time to at least one sub electronic device. Here, the first delay time may be getting longer as the folding angle is increased.

In addition, the electronic device 100 may detect the user position. In addition, the electronic device 100 may adjust at least one of the volume or delay time of each audio signal of the plurality of channels based on each distance between the user position and the electronic device or at least one other electronic device.

Here, the electronic device 100 may adjust the volume of the audio signal output by the electronic device disposed at the first distance from the user position to the first volume, and adjust the volume of the audio signal output by the electronic device disposed at the second distance farther than the first distance from the user position to the second volume. Here, the second volume may be greater than the first volume.

In addition, the electronic device 100 may adjust the audio signal output by the electronic device disposed at the first distance from the user position to be output after being delayed for the second time from the audio signal output by the electronic device disposed at the second distance farther than the first distance from the user position.

Meanwhile, the method according to the various embodiments may be provided by being included in a computer program product. The computer program product may be traded as a product between a seller and a purchaser. The computer program product may be distributed in the form of a machine-readable storage medium (for example, a compact disc read only memory (CD-ROM)), or may be distributed online (for example, downloaded or uploaded) through an application store (for example, PlayStore^{™}) or directly between two user devices (for example, smartphones). In case of the online distribution, at least a part of the computer program product (e.g., downloadable app) may be at least temporarily stored or temporarily provided in the machine-readable storage medium such as a server memory of a manufacturer, a server memory of an application store, or a relay server memory.

The method according to the various embodiments of the present disclosure may be implemented by software including an instruction stored in the machine-readable storage medium (for example, the computer readable storage medium). A machine may be a device that invokes the stored instruction from a storage medium, may be operated based on the invoked instruction, and may include the electronic device in the disclosed embodiments.

Meanwhile, the machine-readable storage medium may be provided in the form of a non-transitory storage medium. Here, the "non-transitory storage medium" may refer to a tangible device and only indicate that this storage medium does not include a signal (for example, an electromagnetic wave), and this term does not distinguish a case where data is semi-permanently stored in the storage medium and a case where data is temporarily stored in the storage medium from each other. For example, the "non-transitory storage medium" may include a buffer in which data is temporarily stored.

In case that the instruction is executed by the processor, the processor may directly perform a function corresponding to the instruction or other components may perform the function corresponding to the instruction under the control of the processor. The instruction may include a code provided or executed by a compiler or an interpreter.

Although embodiments of the present invention are shown and described as above, the invention is not limited to the above-mentioned specific embodiments, and may be variously modified by those skilled in the art to which the present disclosure pertains without departing from the scope of the present invention as claimed.

## Claims

1. An electronic device connectable to at least one other electronic device to provide a multi-display system, the electronic device comprising:
a display;
at least one speaker configured to output an audio signal;
at least one first sensor configured to detect a folding angle between the electronic device and the at least one other electronic device when the at least one other electronic device is connected to the electronic device;
a communication interface configured to perform communication with the at least one other electronic device;
a memory; and
a processor configured to:
acquire information on the folding angle between the electronic device and the at least one other electronic device through the first sensor while the electronic device is connected to the at least one other electronic device and operated in a multi-display mode,
identify channel mapping information of the audio signal that corresponds to the folding angle,
process an input audio signal into a plurality of channels based on the channel mapping information, and
output the audio signal of some channels among the plurality of channels through the at least one speaker, and control the communication interface to transmit information on the audio signal of the other channels among the plurality of channels to the at least one other electronic device.

2. The device as claimed in claim 1, wherein the processor is configured to:
process the input audio signal into the plurality of channels based on first channel mapping information in the case that the electronic device and the at least one other electronic device are in an unfolded state, and
process the input audio signal into the plurality of channels based on second channel mapping information in the case that the electronic device and the at least one other electronic device are in a folded state with a first folding angle.

3. The device as claimed in claim 1, wherein the processor is configured to:
identify volume information of each audio signal of the plurality of channels based on the folding angle, and
output the audio signal of the partial channel at a first volume through the at least one speaker, and control the communication interface to transmit information for controlling the audio signal of the other channel to be output at a second volume to the at least one other electronic device, based on the volume information.

4. The device as claimed in claim 3, wherein the first volume is greater than the second volume, and
the second volume is reduced as the folding angle is increased.

5. The device as claimed in claim 1, wherein the processor is configured to:
identify delay information of each audio signal of the plurality of channels based on the folding angle, and
output the audio signal of some channels through the at least one speaker, and control the communication interface to transmit information for controlling the audio signal of the other channels to be output after being delayed for a first time to the at least one other electronic device, based on the delay information.

6. The device as claimed in claim 5, wherein the first delay time increases as the folding angle is increased.

7. The device as claimed in claim 1, further comprising a second sensor configured to detect a user position,
wherein the processor is configured to:
detect the user position through the second sensor, and
adjust at least one of the volume or delay time of each audio signal of the plurality of channels based on the distance between the user position and the electronic device or the at least one other electronic device.

8. The device as claimed in claim 7, wherein the processor is configured to:
adjust the volume of the audio signal output by the electronic device disposed at a first distance from the user position to a first volume, and
adjust the volume of the audio signal output by the electronic device disposed at a second distance, which is farther than the first distance, from the user position to a second volume,
the second volume being greater than the first volume.

9. The device as claimed in claim 1, wherein the processor is configured to adjust the audio signal output by the electronic device disposed at a first distance from a user position to be output after being delayed for a second time from the audio signal output by the electronic device disposed at a second distance, which is farther than the first distance, from the user position.

10. The device as claimed in claim 1, wherein the channel mapping information of the audio signal that corresponds to the folding angle is pre-stored in the memory.

11. A method for controlling an electronic device that is connectable to at least one other electronic device to provide a multi-display system, the method comprising:
acquiring information on a folding angle between the electronic device and the at least one other electronic device while the electronic device is connected to the at least one other electronic device and operated in a multi-display mode;
identifying channel mapping information of an audio signal that corresponds to the folding angle;
processing an input audio signal into a plurality of channels based on the channel mapping information; and
outputting the audio signal of some channels among the plurality of channels through at least one speaker, and transmitting information on the audio signal of the other channels among the plurality of channels to the at least one other electronic device.

12. The method as claimed in claim 11, comprising:
processing the input audio signal into the plurality of channels based on first channel mapping information in the case that the electronic device and the at least one other electronic device are in an unfolded state, and
processing the input audio signal into the plurality of channels based on second channel mapping information in case that the electronic device and the at least one other electronic device are in a folded state with a first folding angle.

13. The method as claimed in claim 11, further comprising identifying volume information of each audio signal of the plurality of channels based on the folding angle,
outputting the audio signal of the partial channel at a first volume through the at least one speaker, and transmitting information for controlling the audio signal of the other channel to be output at a second volume to the at least one other electronic device, based on the volume information.

14. The method as claimed in claim 13, wherein the first volume is greater than the second volume, and
the second volume is reduced as the folding angle is increased.

15. The method as claimed in claim 11, further comprising identifying delay information of each audio signal of the plurality of channels based on the folding angle,
outputting the audio signal of some channels through the at least one speaker, and transmitting information for controlling the audio signal of the other channels to be output after being delayed for a first time to the at least one other electronic device, based on the delay information.
